# EUROPEAN PATENT APPLICATION

(11) **EP 3 434 460 A1**
(43) Date of publication of application: **30.01.2019**
(21) Application number: 18184780.7
(22) Date of filing: 20.07.2018
(51) Int. Cl.: B29C 70/78, B33Y 80/00, B33Y 10/00, B29C 64/112, B29C 41/02, B29L 7/00, B29L 9/00

(54) **METHOD FOR DEPOSITION OF MULTI-MATERIAL COATINGS ON A CARRIER SHEET**

(30) Priority: 27.07.2017 US 201715661448
(71) Applicant: United Technologies Corporation, Farmington, CT 06032 (US)
(72) Inventor: TWELVES, Jr., Wendell, Glastonbury, CT Connecticut 06033 (US); ULRICH, David, Marlborough, CT Connecticut 06447 (US)
(74) Representative: Dehns

(57) **Abstract**

An additively manufactured component (10) includes a planar sheet (12) and a coating (14) applied to the planar sheet (12) to form the component (10). The component (10) is configured for attachment to a non-planar surface of a workpiece.A method of applying a coating to a work piece is also disclosed.

## Description

### BACKGROUND

Inkjet printing can be used to form single or multi-material coatings and three dimensional objects useful in many applications. Current inkjet printing systems, however, are limited to deposition onto generally planar workpieces, due to the size of the deposition chamber and the design of inkjet arrays. Thus, the need exists for a method of inkjet printing onto surfaces of various sizes with both simple and complex geometries.

### SUMMARY

An additively manufactured component includes a planar sheet and a coating applied to the planar sheet to form the component. The component is configured for attachment to a non-planar surface of a workpiece.

A method of applying a coating to a workpiece includes applying the coating to a planar sheet to form a component, and attaching the component to a non-planar surface of the workpiece.

### BRIEF DESCRIPTION OF THE DRAWINGS

FIG. 1 is a cross-section of a first inkjet printed component.
FIG. 2 is a cross-section of a second inkjet printed component.
FIG. 3 is a perspective view showing the formation of a printed component.
FIG. 4 is a simplified view showing the printed component attached to a non-planar surface.

### DETAILED DESCRIPTION

A method of applying an inkjet printed coating to a non-planar surface is described herein. The method includes applying a single or multi-material coating to a planar carrier sheet. The coating can also include three dimensional structures. The coating and sheet are attached to the non-planar surface, and the sheet can optionally be removed. This method provides a simple and cost effective way of printing components onto non-planar workpieces.

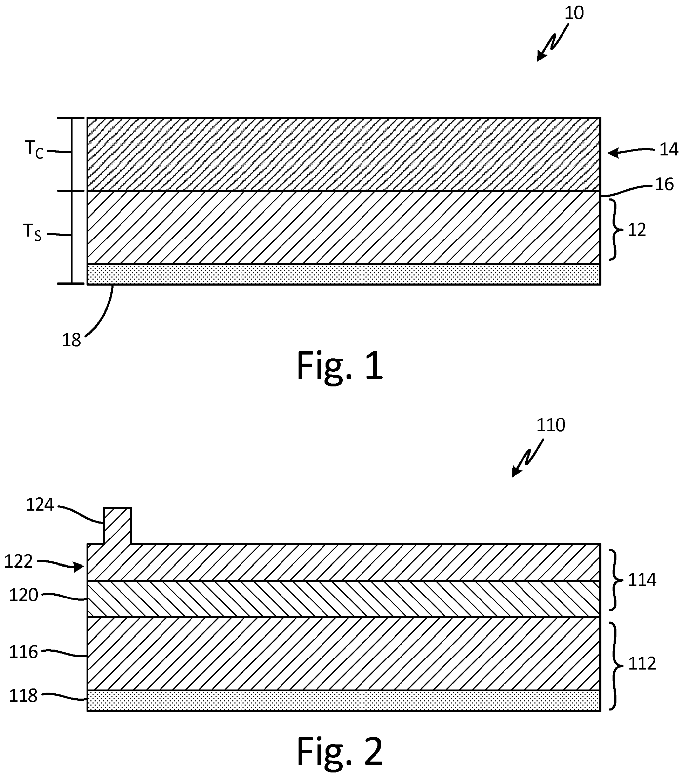

FIG. 1 is a cross-section of component 10. Component 10 includes planar carrier sheet 12 and coating 14 provided on sheet 12. Sheet 12 includes carrier layer 16 and adhesive layer 18. In other embodiments, sheet 12 can include a plurality of carrier layers 16 and an optional adhesive layer 18. Carrier layer (or layers) 16 can be formed from polymers, metals, alloys, and other suitable sheet stock materials. Sheet 12 can have a thickness T_{S} ranging from 0.001 in to 1.000 in (0.025 mm to 25.400 mm), with a more common range between 0.005 in to 0.030 in (0.127 mm to 0.762 mm).

Coating 14 can be a single layer, as shown, and can be formed from homogenous or heterogeneous materials, depending on the application. Such materials include polymers, metals, alloys, ceramics, chemicals, and other suitable coating materials. Coating 14 can have a thickness T_{C} ranging from a sub-nanometer thickness to 0.500 in (12.700 mm), with a more common range of 0.002 in to 0.100 in (0.051 mm to 2.540 mm).

FIG. 2 is a cross-section of alternative component 110. Component 110 includes carrier sheet 112 having carrier layer 116 and adhesive layer 118, and coating 114. In the embodiment shown, coating 114 includes layers 120 and 122, which can be formed from the same or different materials. Coating 114 also includes 3D protrusion 124. Protrusion 124 can be, for example, a mounting boss or bracket, antenna, turbulator, stiffening ribs, beads, or a protective bumper, depending on the intended use of component 110. In other embodiments, coating 114 can include a plurality of protrusions 124 and/or can be formed as a single layer or as more than two layers.

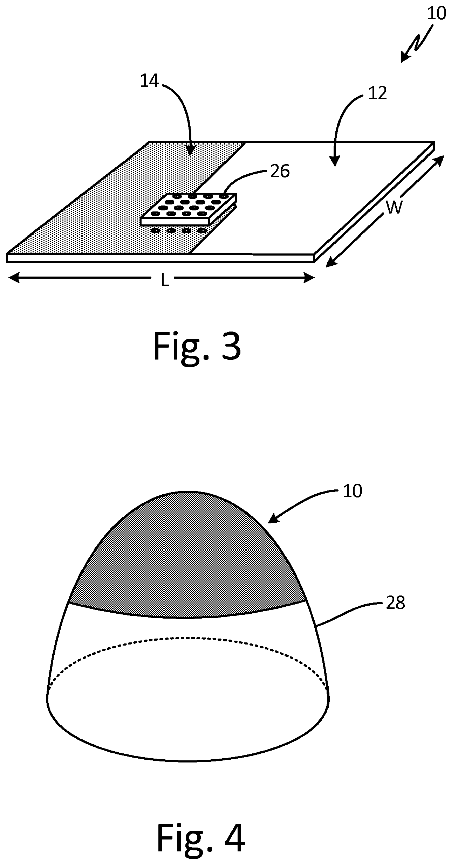

FIG.3 is a perspective view showing inkjet array 26 applying coating 14 to carrier sheet 12 in order to form component 10. Array 26 can be part of a printing system that uses a deposition chamber or an open gantry. Accordingly, sheet 12 can be configured as a fixed sheet, translating sheet, or part of a large scroll of sheet stock. Sheet 12 has a total area determined by its length L and width W. Because the size of the printing system can vary, the total area of sheet 12 can range from 1.00 in² to 60 ft² (645.16 mm² to 5.57 m²) or more.

In the embodiment shown, coating 14 is being applied to sheet 12 such that it covers sheet 12 from end to end. In other embodiments, coating 14 may cover only a portion of sheet 12, and can be formed as a variety of shapes, textures, and patterns. Indexing marks can also be printed onto sheet 12 along with coating 14 to allow operators to orient component 10 on the workpiece. Once coating 14 is applied to sheet 12, the coating can optionally be cured before component 10 is attached to the workpiece. Alternatively, coating 14 can be cured after component 10 is attached to the workpiece. The materials chosen for sheet 12 and coating 14 can be based upon such factors as operating environment conditions and chemical compatibility.

FIG. 4 shows component 10 attached to non-planar workpiece 28. In the embodiment shown, workpiece 28 is a domed structure, such as a radome or torpedo nose. However, workpiece 28 can be any structure comprising planar and/or non-planar surfaces with varying geometric complexities. Component 10 can be adhered to workpiece 28 using adhesive layer 18 (if included), or by coating workpiece 28 with an adhesive prior to attaching component 10. For embodiments in which component 10 is adhered to an adhesive-coated workpiece 28 on the side of coating 14, sheet 12 can subsequently be peeled away to leave coating 14 adhered to workpiece 28. In other embodiments, component 10 can be attached to workpiece 28 using a thermoforming process.

Depending on the curvature or other geometric features of workpiece 28, stretching and/or conformal draping of component 10 may be required during attachment. In such cases, local thickening of coating 14 can be performed during the application of coating 14 compensate for thinning caused by stretching or deforming component 10. Protrusion 124 of FIG. 2 can also represent a locally-thickened region of coatings 14 and 114. Coating 14 can further include locally thinned regions, if required.

The disclosed method allows for the application of a printed coating to workpiece surfaces having both simple and complex geometries. The use of carrier sheets also allows for the application of printed coatings on large and small workpieces alike. Potential applications for the resultant coating include electrical circuits, electrical insulation coatings, RF components, antennae, sensors, strain gauges, filters, anti-corrosion coatings, anti-microbial coatings, mold-resistant coatings, stealth/camouflage coatings, erosion strips, flame retardant coatings, thermal insulation coatings, reflective coatings, anti-ice coatings, decorative coatings, decals, stickers, adhesive-faced laminates, and more.

### Discussion of Possible Embodiments

The following are non-exclusive descriptions of possible embodiments of the present invention.

An additively manufactured component includes a planar sheet and a coating applied to the planar sheet to form the component. The component is configured for attachment to a non-planar surface of a workpiece.

The component of the preceding paragraph can optionally include, additionally and/or alternatively, any one or more of the following features, configurations and/or additional components:
The planar sheet includes at least one layer formed from a material selected from the group consisting of polymers, metals, metal alloys, and combinations thereof.

The at least one layer includes a first layer and a second layer.

The first layer or the second layer is an adhesive layer.

A thickness of the planar sheet ranges from about 0.005 in to about 0.030 in (about 0.127 mm to about 0.762 mm).

A total area of the planar sheet is between 1.00 in² to 60 ft² (645.16 mm² to 5.57 m²).

The coating includes a three-dimensional portion.

The coating includes a first material and a second material.

The coating is formed from a material selected from the group consisting of polymers, metals, metal alloys, ceramics, chemicals, and combinations thereof.

A thickness of the coating ranges from about 0.002 in. to about 0.100 in (0.051 mm to 2.540 mm).

A method of applying a coating to a workpiece includes applying the coating to a planar sheet to form a component, and attaching the component to a non-planar surface of the workpiece.

The method of the preceding paragraph can optionally include, additionally and/or alternatively, any one or more of the following features, configurations and/or additional components:
Applying the coating includes depositing at least one material onto the planar sheet using a material jetting technique.

The at least one material is selected from the group consisting of polymers, metals, metal alloys, ceramics, chemicals, and combinations thereof.

The coating further includes a three-dimensional portion.

The method further includes curing the coating prior to attaching the component to the non-planar surface.

The planar sheet includes at least one layer formed from a material selected from the group consisting of polymers, metals, metal alloys, and combinations thereof.

The at least one layer comprises a first layer and a second layer.

The first layer or the second layer is an adhesive layer.

Attaching the component to the non-planar surface includes adhering or thermoforming.

The method further includes separating the planar sheet from the coating after attaching the component to the non-planar surface, such that the coating remains attached to the non-planar surface.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An additively manufactured component (10) comprising:
a planar sheet (12); and
a coating (14) applied to the planar sheet (12) to form the component (10);
wherein the component (10) is configured for attachment to a non-planar surface of a workpiece.

2. The component (10) of claim 1, wherein the planar sheet (12) comprises at least one layer formed from a material selected from the group consisting of polymers, metals, metal alloys, and combinations thereof.

3. The component (10) of claim 2, wherein the at least one layer comprises a first layer and a second layer, wherein, optionally, the first layer or the second layer is an adhesive layer (18).

4. The component (10) of any preceding claim, wherein a thickness (Tₛ) of the planar sheet (12) ranges from about 0.005 in to about 0.030 in (about 0.127 mm to about 0.762 mm), wherein, optionally, a total area of the planar sheet (12) is between 1.00 in² to 60 ft² (645.16 mm² to 5.57 m²).

5. The component (10) of any preceding claim, wherein the coating (14) comprises a three-dimensional portion.

6. The component (10) of any preceding claim, wherein the coating (14) comprises a first material and a second material.

7. The component (10) of any preceding claim, wherein the coating (14) is formed from a material selected from the group consisting of polymers, metals, metal alloys, ceramics, chemicals, and combinations thereof.

8. The component (10) of any preceding claim, wherein a thickness (T_{c}) of the coating (14) ranges from about 0.002 in to about 0.100 in (about 0.051 mm to about 2.540 mm).

9. A method of applying a coating (14) to a workpiece, the method comprising:
applying the coating (14) to a planar sheet (12) to form a component (10); and
attaching the component (10) to a non-planar surface of the workpiece.

10. The method of claim 9, wherein applying the coating (14) comprises depositing at least one material onto the planar sheet (12) using a material jetting technique, wherein, optionally, the at least one material is selected from the group consisting of polymers, metals, metal alloys, ceramics, chemicals, and combinations thereof.

11. The method of claim 9 or 10, further comprising curing the coating (14) prior to attaching the component (10) to the non-planar surface.

12. The method of any of claims 9 to 11, wherein the planar sheet (12) comprises at least one layer formed from a material selected from the group consisting of polymers, metals, metal alloys, and combinations thereof.

13. The method of claim 12, wherein the at least one layer comprises a first layer and a second layer, wherein, optionally, the first layer or the second layer is an adhesive layer (18).

14. The method of any of claims 9 to 13, wherein attaching the component (10) to the non-planar surface comprises adhering or thermoforming.

15. The method of any of claims 9 to 14, further comprising separating the planar sheet (12) from the coating (14) after attaching the component (10) to the non-planar surface, such that the coating (14) remains attached to the non-planar surface.
